# EUROPEAN PATENT APPLICATION

(11) **EP 0 758 065 A1**
(43) Date of publication of application: **12.02.1997**
(21) Application number: 96202217.4
(22) Date of filing: 07.08.1996
(51) Int. Cl.: F16L 3/04

(54) **Clamping member, system and tool for fixing an object in a recess**

(30) Priority: 07.08.1995 NL 1000944
(71) Applicant: Japenga, Albert, 9601 LL Hoogezand (NL)
(72) Inventor: Japenga, Albert, 9601 LL Hoogezand (NL)
(74) Representative: Smulders, Theodorus A.H.J., Ir.

(57) **Abstract**

A clamping member for fixing an object in a slot (41) or recess in a wall, floor or ceiling (40). The clamping member has one or more feet (2, 52, 53, 54, 70, 83), which feet each have a base part (3') which, in operation, cooperates with a wall (43, 44) of the slot (41), and a connecting part (4, 46, 47, 56) interconnecting the feet (2, 52, 53, 54, 70) or a foot (83) and a coupling member (80). Because the connecting part (4, 46, 47, 56, 82) is resiliently compressible, an improved retention in the slot, an easier fixation and a limitation of the sensitivity to tolerances on the measurement of the slot and the object are obtained. There is also described a tool for fitting clamping members, which tool comprises a storage holder (90) from which stacked, biased clamping members can one by one be fitted and released for relaxing.

## Description

The invention relates to aids for fixing objects in recesses, in particular in recesses in a wall, floor or ceiling.

In house-building, in particular renovation or reconstruction of existing houses, it is often necessary to replace water supply pipes, gas pipes, heating pipes, electricity pipes and the like, or to conceal or reroute them, etc. In that case, a slot is typically cut or slotted in an existing wall, into which a tube is inserted which is then covered with plastering or the like. For fixing the tube in the slot prior to and during the application of a covering layer and during the setting thereof, U-shaped clamps are sometimes used, which are to be secured by screws. This is a fairly labor-intensive method, because the slot should be widened locally to provide room for the clamps, while in addition, holes for the screws to be secured in plugs have to be drilled with a drilling machine. Hence, instead of clamps, nails or steel nails are typically used, driven into the wall obliquely across the tube fitted in the slot. A drawback of this method is that the nails often do not find a good hold in the wall. Another drawback is that the nails often have their heads project from the wall surface and hence render the application of a covering layer more difficult, and that they should moreover be removed again after the application of the covering layer. This last may again cause damage to the finished surface.

French patent application 2 023 593 discloses aids for fixing a tube in a slot in the form of a clamping member according to the introductory part of claim 1. In this U-shaped clamping member, the connecting part is of flexible design, so that the distance between the free ends of the legs of the U-shaped clamping member is resiliently adaptable to the width of the slot wherein the clamping member is fitted. However, a number of drawbacks are associated with this clamping member.

When the clamping member is being fitted, the legs of the clamping member, which are resiliently pressed together, slide along the walls of the slot under a bias. As a consequence, precisely in the area where retention of the clamping member is desired, the wall is for a significant part cleared of irregularities that may contribute to obtaining the intended retention. Due to the fact that the legs extend far into the slot, they are not easily accessible during insertion, so that this effect cannot properly be prevented.

A further drawback of this known clamping member is that the clamping force with which it clamps against the walls of the slot is limited by, in the first place, the distance between the connecting part and the parts of the legs of the clamping member that, in inserted condition, abut against the walls of the slot, and, in the second place, the necessity that the clamping member should be able to be pressed into the slot while exerting the clamping force, also if the slot contains some irregularities.

Further, this clamping member imposes relatively high requirements on the tolerance on the width of the slot and of the remaining space between the tube to be fixed and the slot. Even in the case of slight deviations, the slot is either too narrow, as a consequence of which the legs of the clamping member no longer fit between the tube and the sidewalls of the slot or the connecting part no longer fits in the slot, or it is too wide, as a consequence of which the clamping force is further limited, retention elementes projecting from the legs are not properly brought into engagement with the slot, if at all, and play remains between the tube and the clamping member. This last is in particular disadvantageous during the filling of the slot.

The objective of the invention is to provide aids whereby a firmer fixation of an object in a recess in a floor, wall or ceiling can be obtained and which moreover imposes less high requirements on the tolerances on the measurements of the recess.

In accordance with an embodiment of the present invention, this objective is realized by constructing the connecting part of a clamping member according to the introductory part of claim 1 so as to be resiliently compressible.

In accordance with another embodiment of the present invention, this objective for fixing objects comprising coupling parts is realized by providing a clamping member according to claim 2. Coupled between two or more of such clamping members, such objects can quickly and reliably be fixed in a recess.

Because the connecting part is resiliently compressible, this part of the clamping member, which part is properly accessible during the insertion of the clamping member, can be held in compression while the clamping member is brought into its intended position. Hence, during fitting, the clamping member does not slide under a bias along the walls of the recess. In this manner, removal of retention-providing irregularities is prevented and a greater press-on force is allowable, because it is not limited by the requirement that the clamping member must be able to slide along the wall of the recess during fitting.

Further, the feet which, in inserted condition, engage the walls of the recess, can be positioned so as to be in line with or at least close to the ends of the connecting part. This is advantageous for obtaining a great press-on force. Another advantage hereof is that it is not necessary to pass parts of the clamping member between the object to be fixed and the slot, as a result of which no room has to be reserved therefor in the slot. Further, owing to the compressibility of the connecting part, the press-on force is within a large compression range sufficient for obtaining adequate retention.

Because deflecting the compressible connecting part in retention direction has relatively little influence on the press-on force against the walls of the recess, it is possible to push the clamping member through slightly during fitting, so that it deflects slightly in retention direction and an extra firm fixation of the object under a bias in retention direction can be obtained.

The invention is further embodied in a tool according to claim 19, whereby clamping members with the elastically compressible connecting members can be stored in biased condition and fitted from a storage holder. Thus, the clamping members can be fitted in a quick and accurately controlled manner.

Hereinafter, the invention will be specified with reference to the accompanying drawings of some exemplary embodiments.
Fig. 1 schematically shows a top plan view of an example of a clamping member according to the invention;
Fig. 2 schematically shows a side elevation of the clamping member of Fig. 1;
Fig. 3 schematically shows an end view of the clamping member of Fig. 1;
Figs. 4, 5 and 6 schematically show an example of a clamping member according to the invention in the operative position, drawn in cross section, top plan view and in perspective;
Figs. 7-10 schematically show some variants of a clamping member according to the invention;
Figs. 11 and 12 schematically show in side elevation and top plan view another variant of a clamping member according to the invention;
Fig. 13 shows pliers for fitting and/or removing a clamping member according to the invention;
Fig. 14 shows a side elevation of a further embodiment of a clamping member according to the invention in mounted condition;
Fig. 15 shows in side elevation a stacking of clamping members according to Fig. 14;
Fig. 16 shows a side elevation of a further embodiment of a clamping member according to the invention in mounted condition;
Fig. 17 shows in perspective view a socket holder to be mounted in a recess in a wall;
Fig. 18 shows, in perspective view, a clamping member according to a further embodiment of the invention, designed for cooperation with a socket holder as shown in Fig. 17;
Fig. 19 shows in schematic side elevation, in section, a storage holder containing a clamping member according to Figs. 14 and 15 in relaxed condition;
Fig. 20 shows in schematic front view the storage holder according to Fig. 19 containing a clamping member in biased condition; and
Fig. 21 shows in perspective view a tool for fitting clamping members as shown in Figs. 19 and 20.

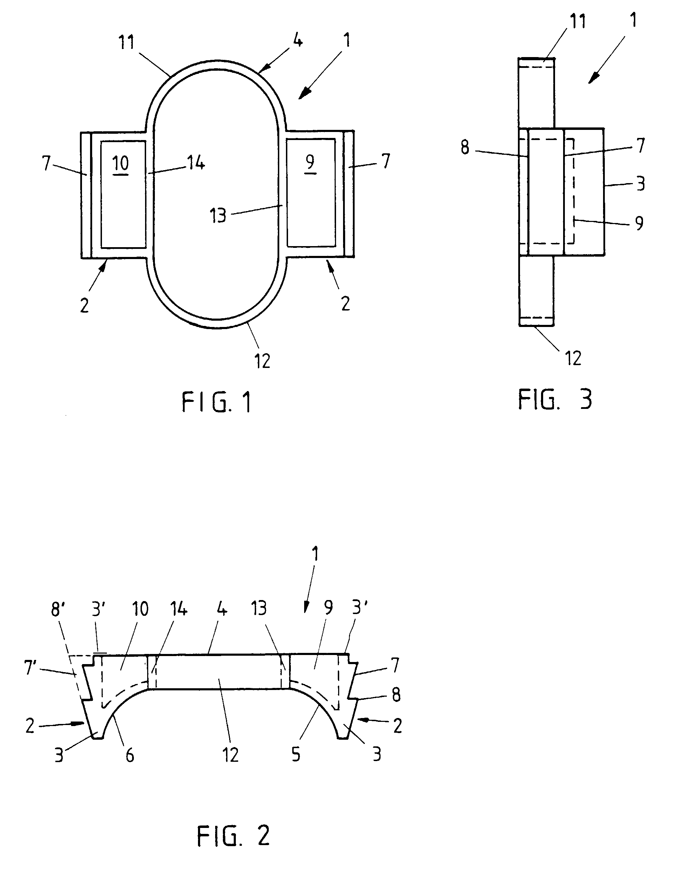

Figs. 1, 2 and 3 schematically show in top, front and side view an exemplary embodiment of a clamping member 1 according to the invention. The clamping member 1 shown essentially comprises two feet 2, interconnected by a flexibly resilient connecting part 4, and which can be conceived to be built up from a base part 3' and a projecting member 3. In this example, the feet are about wedge-shaped in cross section and can on both sides of a tube laid in a slot be pressed between the tube and the wall of the slot. The resilient connecting piece 4 bends around the tube and, if the measurement of the clamping member has been properly chosen, is slightly compressed. As a result, an outwardly directed force is exerted on the feet, pushing the feet against the slot wall extra firmly.

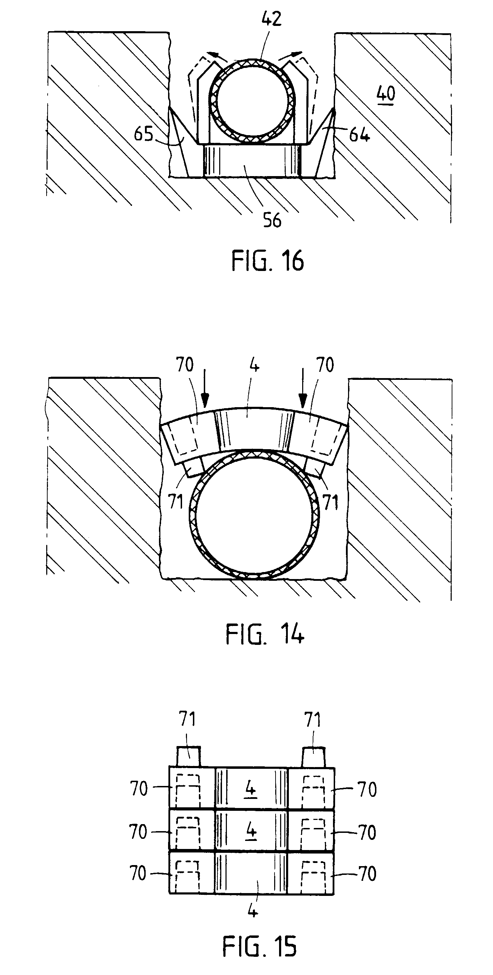

In the example shown, the projecting members 3 of the feet have, on the side facing the connecting part (the inside) a concave shape, as indicated at 5 and 6. Because of this shape, the feet can rest against the tube in proper abutment. In the case where non-round tubes or rods or the like should be fixed, the feet can have an adapted shape on the inside. However, the feet need not necessarily have a shape corresponding to the shape of the elongated object. Fig. 14 for instance shows the use of relatively small projections.

On the side facing away from the connecting part (the outside), the feet may have been provided with friction-increasing means, for instance a rough surface, projections, etcetera. In the example shown, barb-shaped projections 7, 8 in the form of longitudinal ribs are used. However, the feet can also be formed without such projections, as shown in broken lines at 7' in Fig. 2. In that case, the edge 8' functions as a kind of barb. Further, the feet can be of a hollow design and, at the top side thereof, i.e. at the side which in the operative condition faces away from the tube, of open design, as shown at 9, 10. This also offers the possibility of rendering the clamping members stackable.

In the example shown, the connecting part 4 is formed from two arcuate strips 11, 12 which, together with the facing edges 13, 14 of the feet, enclose an approximately oval opening.

Hence, the distance between the feet can in a simple manner be adapted to the tube diameter and/or the slot width. Instead of the arcuate strips 11, 12, other flexible, resilient means can be used as well, such as for instance one or more helical springs or a corrugated plate or one or more strips bent zigzag or the like.

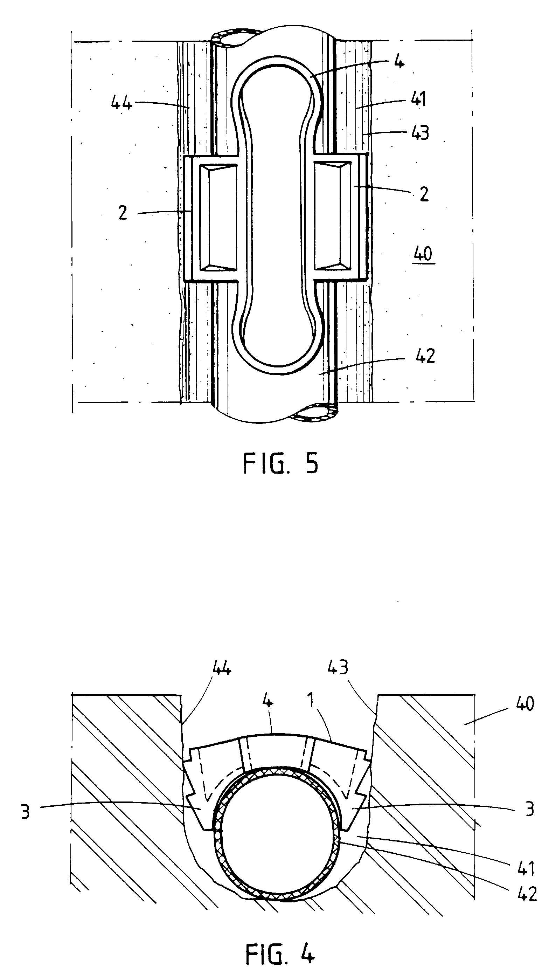

The practical use of the clamping member described is illustrated in Figs. 4-6. These Figures show a wall 40, which will usually be of bricky material, and wherein a slot 41 has been provided through slotting, cutting, grinding or the like. The wall can also be a floor or a ceiling. Disposed in the slot 41 is a tube 42, which can for instance be a (floor) heating pipe, a water supply pipe, a gas pipe or an electricity pipe. Although the invention is described for use with a tube, any elongated object that is to be fixed in a slot can in principle be secured by one or more clamping members according to the invention. Also, the slot need not necessarily be a slot in a wall or ceiling or lie in bricky material.

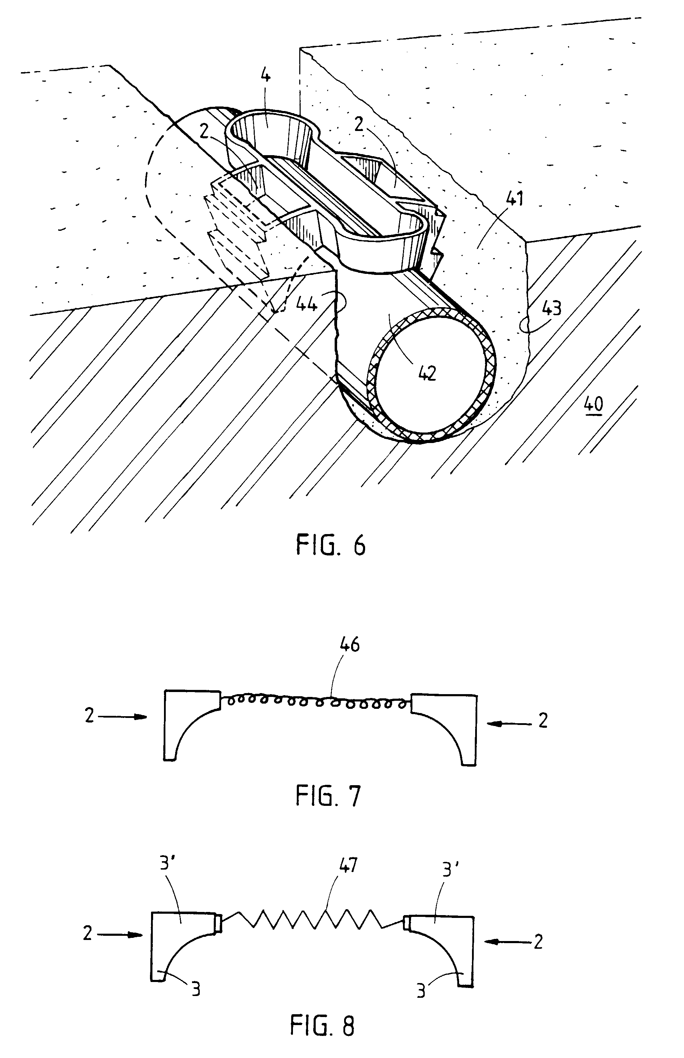

A clamping member according to the invention is straddled over the tube 42, the feet 2 and in particular the base parts 3' thereof pressing against the walls 43, 44 of the slot on both sides of the tube. Figs. 5 and 6 clearly show that the connecting part 4 is slightly compressed. In the operative condition shown, the projecting members 3 extending from the base part partly abut against the object to be fixed.

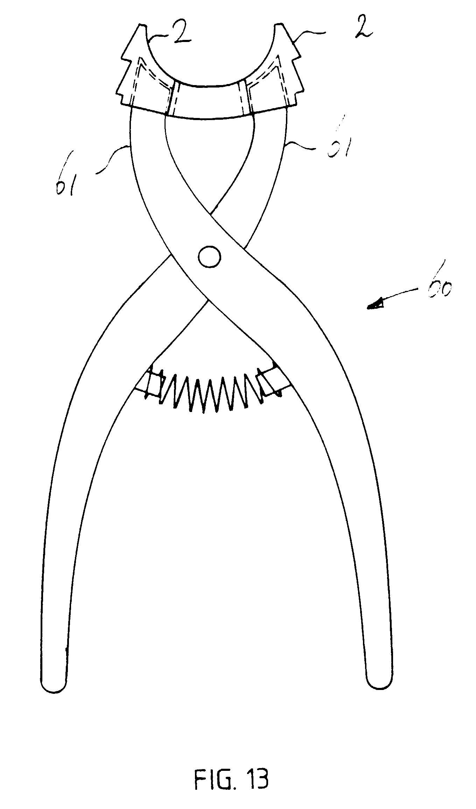

In most cases, the clamping members according to the invention can readily be fitted manually and do not require extra tools and/or mounting operations. However, if so desired, it is possible to use special pliers for fitting or removing the clamping members, as shown in Fig. 13. The clamping members can be manufactured from any suitable material or from any suitable combination of materials. Preferably, the clamping members are manufactured in one piece from plastic through injection molding. Suitable plastics are, for instance, polyurethane molding resin, polyethene, polypropene, etcetera.

Figs. 7 and 8 show, by way of example, two alternative embodiments. Fig. 7 schematically shows, in cross section, an exemplary embodiment wherein the feet are interconnected by a helical spring 46. This can for instance be a metal spring. It is also possible to use several springs. Fig. 8 schematically shows an example wherein the feet are interconnected by a plate-shaped or strip-shaped part 47, bent zigzag. When a strip-shaped part is used, it can of course also be positioned edgewise (so rotated 90° relative to the plane of the drawing compared with Fig. 8). It is also possible to use several strips. Instead of a zigzag form, a different form, for instance a wave form, a toothed form or the like can be used.

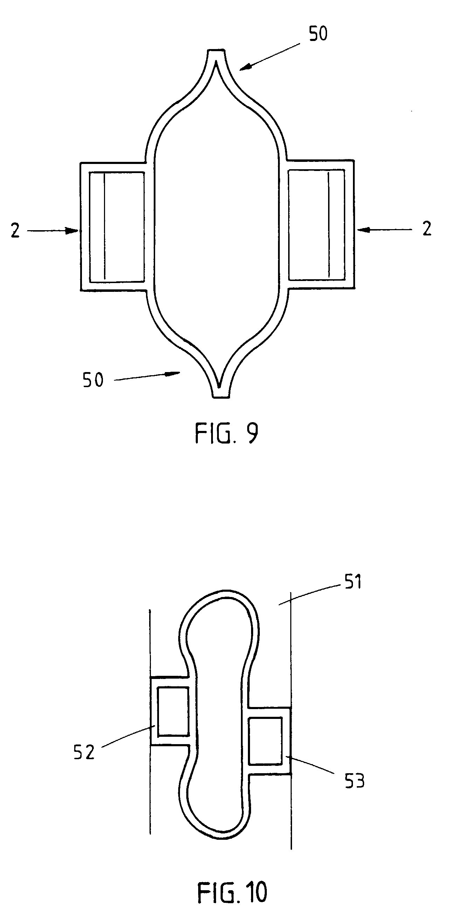

Fig. 9 shows another variant, wherein the feet are interconnected by means of two resilient strips in the form of pointed arches, as indicated by 50.

Fig. 10 schematically shows a variant wherein the feet 52, 53 are not directly opposite each other but are slightly staggered, viewed in the longitudinal direction of the tube and/or slot 51.

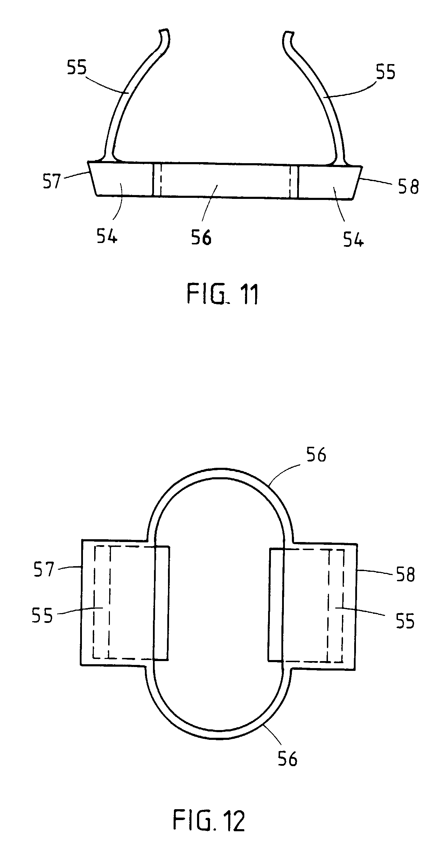

Figs. 11 and 12 show in side elevation and top plan view respectively a variant of a clamping member according to the invention, which is suitable for being inserted into a slot prior to the tube to be secured. Now, the feet are rather formed as resilient arms (projecting members) 55 extending from base parts 54, which arms are again connected by a resilient connecting part 56 and which can clasp the tube to be fitted. The connecting part can again have any suitable shape, as for instance described hereinabove. The base parts lying in the plane of the connecting part have slightly projecting, sharp shoulders 57, 58, promoting a proper clamping of the tube clamp in a slot.

A proper clamping can also be obtained by elongating the sharp shoulders obliquely upwards and outwards to form wings, as shown in the embodiment of Fig. 16 at 64, 65. If so desired, the variants of Figs. 11, 12 and 15 can also be used for being fitted over a tube that has already been inserted into a slot.

Although in many cases the clamping members can readily be fitted by hand, it is generally preferred that for this purpose special biasing tools be used, such as pliers having special jaws fitting in the hollow feet and whereby a clamping member according to the invention can be slightly compressed to be subsequently inserted into a slot. This is schematically shown in Fig. 13. A pair of pliers 60 has jaws 61, fitting in the hollow feet 2 of a clamping member according to the invention.

Figs. 14 and 15 schematically show another variant of a clamping member according to the invention in an operative condition and a stacked condition respectively. The variant shown has again a resilient connecting part which, like the part shown in Fig. 1, can have an oval shape and comprises, on either side thereof, feet, in this case more appropriately referred to as ears 70, which ears lie substantially in the same plane as the connecting part but are provided with one or more pairs of projections 71 on the side that, in operation, faces the object to be secured. The ears are at least partly hollow, allowing the clamping members to be stacked in the manner schematically shown in Fig. 15, with the projections of one clamping member slipping into the recesses of the ears of the other clamping member. In embodiments other than the one shown in Fig. 16, similar wings as the wings 64, 65 can be used as well.

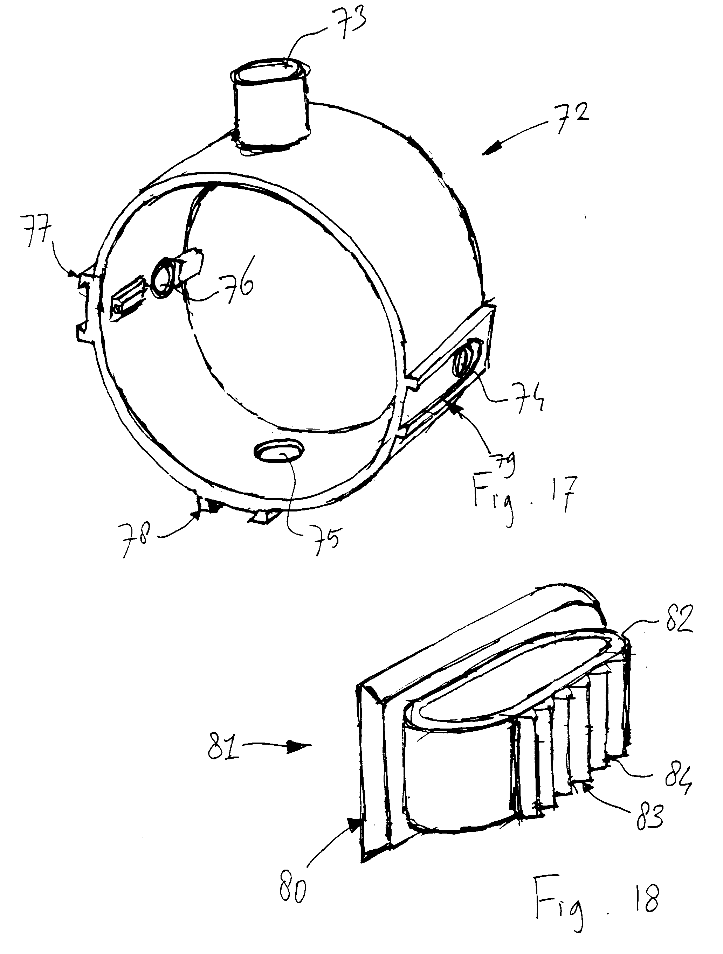

In Fig. 17, an example is shown of an object which can be fixed in a recess in a wall, a floor or a ceiling by a clamping member according to the embodiment of the invention shown in Fig. 18. The object shown in Fig. 17 is a socket holder 72 having connections 73, 74, 75 and 76 to which cable ducts can be connected. Further, via the connections 73-76, electricity leads can extend into the socket holder 72 from the outside. The socket holder 72 comprises three couplings 77, 78, 79 in the form of dovetail-shaped grooves having a blind end at the back of the socket holder. Fitting in these grooves are coupling parts 80 of clamping members 81 as shown, enlarged, in Fig. 18. This clamping member 81 comprises a resiliently compressible connecting part 82 carrying the coupling part 80 on one side thereof and a foot 83 on the other, which foot 83 has been provided with serrations 84 on the surface facing away from the coupling part.

After the socket holder 72 has been inserted into a recess of suitable dimensions, the clamping members 81 can be slid into the couplings 77, 78, 79 of the socket holder 72, with the connecting parts 82 preferably being in compressed condition. In released condition, the clamping members 81 hold the socket holder 72 fixed firmly in the recess. Fitting the clamping members in compressed condition can for instance be carried out by passing them into the recess between the socket holder 72 and a smooth guide strip, with the ridged surface 84 of the foot 83 facing the guide strip. Owing to the smooth guide strip between the wall and the clamping member, friction during insertion remains limited and damage to the slot, which would result in a reduced retention after fitting, is prevented. Then, the smooth guide strip can be withdrawn without actually affecting the wall of the slot in the area where the clamping member, after fitting, engages the slot.

It is observed that for fixing objects having couplings, clamping members of various different types can be used. In particular, many variants are conceivable for the resiliently compressible connecting part, such as a connecting part bent in a direction transverse to the inserting direction of the coupling part, or a connecting part in the form of a single or double leaf spring. It is also possible to provide the connecting part with means which hold this part in compressed condition and which, after the fitting of the clamping member, are removed or put out of action in any other manner, whereupon the clamping member assumes a clamping position.

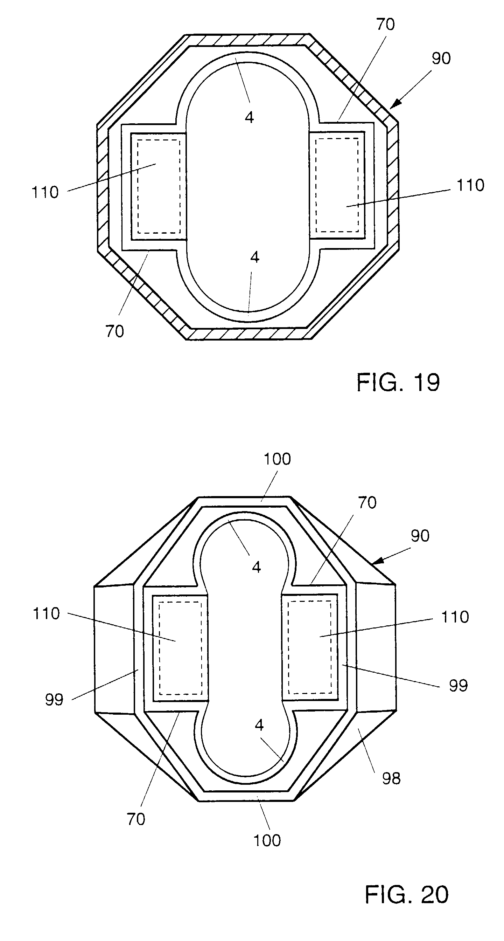

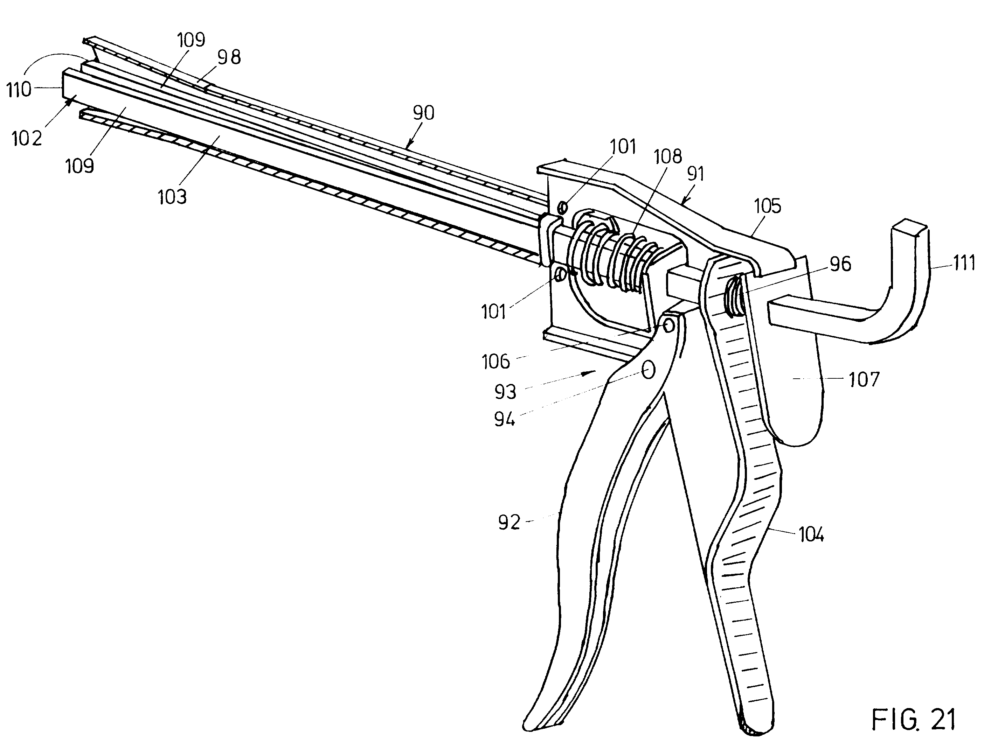

Figs. 19 and 20 show a clamping member as shown in Figs. 14 and 15, in successive conditions in an elongated storage holder 90. This storage holder 90 is shown in a longitudinally cutaway view in Fig. 21 as part of the tool 89 shown therein for fitting clamping members. The principle, appearing from Figs. 19 and 20, for compressing the connecting part 4 connecting two feet (or ears) 70 is also applicable to a connecting part connecting a foot and a coupling part.

The storage holder 90 is detachable from the operating portion 91. After insertion of a stack of clamping members into the storage holder 90 from an end thereof to be turned towards the operating portion 91, the clamping members are in the relaxed condition in the storage holder 90, shown in Fig. 19. The storage holder has a biasing portion 98 which, in mounted condition, is remote from the operating portion and which has a cross section changing towards the end of the storage holder from the shape shown in Fig. 19 into the shape shown in Fig. 20. In the biasing portion 98 a pair of opposite wall portions 99 converge towards the fee end and a pair of opposite wall portions 100, directed transversely thereto, diverge towards the free end. Due to the fact that the clamping members are positioned in the storage holder 90 so that in the biasing portion 98 the feet point towards the converging wall portions, feet are biased into the condition shown in Fig. 20 upon displacement through the biasing portion 98 towards the free end of the storage holder, in which condition the connecting portions 4 have been brought into a compressed condition. If the clamping member is fitted in a slot in this condition, no damage is caused to the wall of the slot and, in particular, retention-promoting irregularities are prevented from being smoothed out. By subsequently pushing the clamping member out of the storage holder 90, the connecting part 4 rebounds until the condition shown in Fig. 14 is reached, in which condition the clamping member has become wedged in the slot. As is clearly demonstrated in Fig. 14, the connecting part 4 of the clamping member is moreover deflected in retention direction, causing the tube to be clamped in the slot under a bias. Thus, a particularly firm fixation of the tube is obtained.

The tool 89 shown in Fig. 21 is especially suitable for quickly and reliably fitting clamping members as shown in Figs. 14, 15, 19 and 20. The operating portion 91 of the tool is detachably coupled to the storage holder by means of a brace (not shown) passed through openings 101 in the operating portion 91. The operating portion 91 has an operating member 92 and a transmission 93 coupled to the operating member 92 for pressing a pusher rod 102 into the storage holder. The operating portion 91 has a pistol handle 104 relative to which the operating member 92 is pivotable. The operating member 92 forms a double lever which is pivotable about a pivot 94 relative to a frame 105 of the operating portion 91 and pivotable about a pivot 106 relative to the handle 104.

When the double lever 92 is operated, the rod 102 is carried along by the handle 104 tilted relative to that rod 102, and is pressed into the storage holder 90, with the length ratio between the portions of the double lever 92 on both sides of the pivot 94 causing a substantial force amplification. Each time after the rod 102 has been advanced, an anchoring plate 107 ensures that the rod 102 can not slide backwards. By a spring 96, the anchoring plate 107, catching along its top edge behind an edge of the frame 105 of the operating portion 91, is urged into a tilted position. Consequently, when exerting a backward force, the rod 102 is directly clasped by the anchoring plate 107 and retained. By a spring 108, the operating member 92 is urged back towards its starting position relative to the pistol handle 93. This also involves the pistol handle 93 being shifted along the rod 102 towards a new position on the rod 102.

The action of the control of the operating member 91 roughly resembles the generally known control of the pusher rod of a manually operated luting gun whereby viscous materials can be pressed from cylindrical holders.

The rod 102 has a front portion divided in longitudinal direction into two flexible legs 109. When processing clamping members, the distance between the feet of the rearmost clamping member pressed against by the rod gradually decreases upon its displacement through the front portion 98 of the holder. Owing to the construction with the rod 102, end faces 110 of the legs 109 (in Figs. 19 and 20 concealed behind the clamping member and hence shown in dotted lines) can follow the variation in the distance between the feet of the rearmost clamping member.

In operation, the tool according to Fig. 21 is handled as follows. A stack of clamping members is slid into the storage holder 90 from the end that is to be coupled to the operating portion 91. Then, the storage holder is coupled to the operating portion 91 and the rod 102 is slid into the storage holder until it strikes the most proximal clamping member and the ends 110 of the rod slip into the feet of that clamping member. By then operating the operating member 92 repeatedly, the rod 102 is displaced in the direction of the free end of the storage holder 90. Accordingly, the clamping members in the storage holder 90 are slid ahead of the rod 102 and, as they approach the free end of the storage holder 90, urged from the condition shown in Fig. 19 into the biased condition shown in Fig. 20. When a clamping member has reached the end of the storage holder 90, it is ready for being fitted in a slot for fixing a tube or the like. For this purpose, the free end of the storage holder 90 is pressed into the slot preferably with some force so as to obtain an attachment of the clamping member under a bias) and then the operating member 92 is operated. As a result, the foremost clamping member is slid from the storage holder 90, permitting it to relax until it has secured itself against the walls of the slot and the subjacent tube is fixed. As the ends 110 of the legs engage the rearmost clamping member, at the location of the feet, and the feet of the successive clamping members connect to one another, the clamping members can readily be bent over a tube during fitting, so that a fixation of the tube under some bias can easily be obtained. The tool is now instantly ready for fitting the next foremost clamping member, so that the fitting operation can be performed at great speed. Because all clamping members are biased and released in the same manner, fixations of highly constant properties are obtained.

After the last clamping member has been ejected, the rod can be retracted by the end 111 bent over in the shape of a hook. For that purpose, the engagement of the anchoring plate 107 on the rod 102 should be removed. This can be effected by pressing the anchoring plate 107 towards the pistol handle 104 at a distance below the rod 102.

As the operating member 92 and the transmission 93 are adapted to displace the rod 102 relative to the storage holder 90 stepwise, in each case, by operating the operating member 92 one or several times, a displacement of the rod 102 can be obtained having the size of the width of one clamping member. Hence, operating the operating member 92 requires only little attention. It is observed that within the framework of the invention, tools for fitting the clamping members from a storage holder can be constructed in various manners. For instance, the storage holder may also be constructed as a rod of such configuration that clamping members provided over that rod are or remain biased during displacement towards the free end. The relaxing of the clamping members cannot only be effected through the release of the clamping member from the storage holder, but also through, for instance, separate operating means or through removal of a biasing member from the relevant clamping member.

## Claims

1. A clamping member for fixing an elongated object in a slot (41) in a wall, floor or ceiling (40), comprising: two opposite, spaced base parts (3') which, in operation, cooperate with a wall (43, 44) of the slot (41), and a resilient connecting part (4, 46, 47, 56) interconnecting the base parts, **characterized in that** the base parts (3') form part of substantially parallel feet (2, 52, 53, 54, 70) on opposite sides of the connecting part, and that the connecting part (4, 46, 47, 56) is resiliently compressible.

2. A clamping member for fixing an object in a recess in a wall, floor or ceiling, comprising: a foot (83) having a base part which, in operation, cooperates with the walls of the recess, a coupling member (80) for coupling to an object (72) to be fixed and a resiliently compressible connecting part (82) interconnecting the foot (83) and the coupling member (80) located on opposite sides thereof.

3. A clamping member according to claim 1 or 2, wherein the connecting part (4, 56, 82) comprises at least one connecting strip.

4. A clamping member according to claim 3, wherein the connecting part (4, 56, 82) comprises two stips bent round outwardly in opposite directions.

5. A clamping member according to any one of the preceding claims, wherein the connecting part (47) comprises at least one alternately bent strip.

6. A clamping member according to claim 1 or 2, wherein the connecting part (46) comprises at least one helical spring.

7. A clamping member according to claim 1, wherein at least the projecting members of the feet (2, 52, 53) are shaped so as to be concave on their facing sides.

8. A clamping member according to any one of the preceding claims, wherein the or each foot (2, 52, 53, 54, 70, 83) comprises retention-increasing provisions (7, 8, 8', 64, 65, 84).

9. A clamping member according to claim 8, wherein at least on a side facing away from the connecting part, the base part of the or each foot is provided with a rough surface.

10. A clamping member according to claim 8 or 9, wherein at least on a side facing away from the connecting part (4, 82), the base part (3') of the or each foot (2, 83) is provided with one or more projecting ribs (7, 8, 84).

11. A clamping member according to any one of the preceding claims, wherein the or each foot (2, 52, 53, 54, 70) is at least partly hollow and open on one side.

12. A clamping member according to any one of the preceding claims, wherein the or each foot (2, 52, 53, 54, 70, 83) and the connecting part are jointly manufactured as one whole through injection molding.

13. A clamping member according to claim 1, wherein the feet (52, 53) are positioned so as to be staggered in a direction parallel to surfaces, facing away from each other, of the base parts.

14. A clamping member according to any one of the preceding claims, wherein the connecting part comprises two strips (50) extending between the feet (2), each strip (50) having the shape of a pointed arch and the pointed arches of the two strips (50) pointing away from each other.

15. A clamping member according to claim 1, wherein the feet (54) comprise resilient arms (55) extending transversely to the connecting part (56), said arms, in the operative condition, clasping an object to be fixed.

16. A clamping member according to any one of the preceding claims, wherein the or each foot comprises, on the outsides thereof, obliquely outwardly directed wings (64, 65) which, in the operative position, abut against the sidewalls (43, 44) of the slot (41).

17. A clamping member according to any one of the preceding claims, of which sides facing away from each other are of such design, that the clamping member is stackable on those sides with identical clamping members.

18. A system for fixing an object in a recess in a wall, ceiling or floor, comprising clamping members according to any one of the preceding claims and a pair of pliers (60) for manipulating the clamping members and having jaws (61) fitting in said recesses in the feet (2).

19. A tool for fitting clamping members according to any one of claims 1-17, comprising: at least one elongated storage holder (90) for receiving a stack of clamping members having, at least adjacent an outlet of the storage holder (90), biased connecting members (4), a pushing member (102) displaceable along the storage holder, an operating member (92) for operating the pushing member (102) and a transmission (93) coupled to the operating member for displacing said pushing member (91) and said stack of clamping members relative to the storage holder (90), in longitudinal direction thereof.

20. A tool according to claim 19, wherein the operating member (92) and the transmission (93) are adapted to displace the pushing member (91) stepwise.
